# EUROPEAN PATENT SPECIFICATION

(11) **EP 3 742 373 B1**
(45) Date of publication and mention of the grant of the patent: **07.01.2026**
(21) Application number: 19176218.6
(22) Date of filing: 23.05.2019
(51) Int. Cl.: G06Q 20/40, G06Q 20/12, G06Q 20/38, G06F 21/84

(54) **SECURED PAYMENT ON DEVICES ENABLED TO BROWSE THE WEB**
GESICHERTE BEZAHLUNG AN VORRICHTUNGEN, DIE IN DER LAGE SIND, IM INTERNET ZU SURFEN
PAIEMENT SÉCURISÉ SUR LES APPAREILS PERMETTANT DE NAVIGUER SUR LE WEB

(43) Date of publication of application: 25.11.2020
(73) Proprietor: Ingenico Belgium, 1130 Bruxelles (BE)
(72) Inventor: YOUSSEF, Mohamed Amine, 1831 Machelen (BE)
(74) Representative: LLR

(56) References cited:
- US-A1- 2008 316 357
- US-A1- 2014 041 050
- US-A1- 2016 042 201
- US-A1- 2016 173 490
- US-A1- 2017 293 776
- ANONYMOUS: "Firmware - Wikipedia", 3 May 2019 (2019-05-03), XP055827754, Retrieved from the Internet <URL:https://en.wikipedia.org/w/index.php?title=Firmware&oldid=895294038> [retrieved on 20210726]

## Description

### FIELD OF THE INVENTION

The invention relates to method and apparatus for performing payments over the web using a payment card requiring to enter a PIN code or similar security code. In particular, it relates to "PIN on glass" technologies.

### BACKGROUND OF THE INVENTION

Payment over internet or other telecommunication network requires the entering a PIN code associated to the card of a cardholder. This code is required for committing the financial transaction,

However, PIN code and other related information are sensible data, which need to be strongly secured. Accordingly entering the PIN code on a terminal may rise security issues.

Some terminals are secured by nature, like some "PoS" (point of sale) terminals, where only payment applications are available without possibilities to install third-party applications or to browse the web. Such terminals are used for payment in a physical shop and cannot be used, then, to place payment over telecommunication networks.

When using terminals to browse servers over the internet, security risks appear. For instance, an application running on the terminal may browse a server data requiring a fake PIN entry. The user may then enter his/her PIN code which can then been stolen by this mischievous server.

Some solutions rely on the use of two separate displays: one dedicated for payment, and managed by built-in applications, and another for other applications like browsers. Consequently, any messages requiring the cardholder to enter a PIN code displayed in the second display will be considered as a fake one by the cardholder.

However, such a solution is both costly, as requiring two separate displays, and not convenient. It is even not usable at all for embedded systems like smartphones and the like. In particular, such solution is not compatible with "PIN on Glass" scheme and with PTS devices (PIN Transaction Security).

There is consequently strong need to propose alternate solution, allowing to use a single screen (or display) while still ensure securing constraints raised by the use of PIN code or other sensitive pieces of information.

US2014/0041050 discloses a method for displaying information on the display device of a terminal, wherein the terminal comprises a protected runtime environment and a normal runtime environment.

### SUMMARY OF THE INVENTION

The object of the present invention is to alleviate at least partly the above mentioned drawbacks. More particularly, the invention aims to secure payments at a device enabled to browse over the web.

This object is achieved with a method according to claim 1.

Preferred embodiments comprise one or more of the following features, which can be taken separately or together, either in partial combination or in full combination:
- said first zone is minimized when no data are received and enlarged when data are received from said payment application;
- when minimized, said first zone displays an explicit text for warning users to not enter sensitive information in said second zone.

Another aspect of the invention relates to a computer program product comprising instructions which, when the program is executed by a computer, cause the computer to carry out the steps of the method as previously defined.

Another aspect of the invention relates to an electronic payment acceptance device according to claim 5.

Preferred embodiments comprise one or more of the following features, which can be taken separately or together, either in partial combination or in full combination:
- the electronic payment acceptance device is configured to minimize said first zone when no data are received and to enlarge it when data are received from said payment application;
- the electronic payment acceptance device is configured to, when minimized, said first zone display an explicit text for warning users to not enter sensitive information in said first zone.

Further features and advantages of the invention will appear from the following description of embodiments of the invention, given as nonlimiting examples, with reference to the accompanying drawings listed hereunder.

### BRIEF DESCRIPTION OF THE DRAWINGS

FIG. 1 shows a very high level architecture according to embodiments of the invention.
FIGs. 2a and 2b show two examples of the appearance of a screen associated to a device according to embodiments of the invention.

### DETAILED DESCRIPTION OF THE INVENTION

The invention applies to various types of electronic payment acceptance devices.

In particular, it applies to PTS-compliant devices. PIN Transaction Security (PTS) devices are used by a merchant at the point-of-interaction for capturing payment card data and validating approval of its use for a transaction. PCI SSC is a working group defining standards, as the PTS requirements, to which terminal vendors shall comply to ensure security design. Further documentation can be found on the website: https://www.pcisecurity standards. org/

The invention may also apply to other devices as well.

There is a need for recent device used for payment to display other information than the sole information required for a payment at a point of sale (PoS). First, because it is desirable to use such devices to browse a web and place online purchase. But also, because while placing a payment, it may be desirable to use the display to show some advertisement or other types of information for the cardholder.

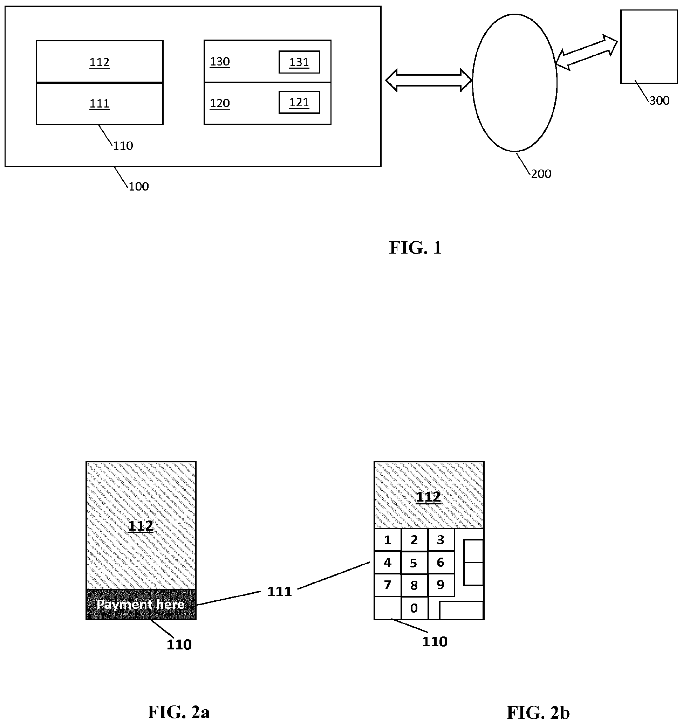

On FIG. 1, a high-level architecture of a device 100 is shown, as comprising a display 100 (or screen) and a software architecture, 120, 130 deployed during the operations of the device 100.

The display, or screen, is a single hardware component by is divided into two separate zones: a secured zone 111 and a free zone 112. This separation is managed by software means, i.e. by the firmware of the device 100.

The software architecture 120, 130 comprises a firmware layer 120 and an application layer 130. The firmware is a built-in piece of software, flashed by the vendor and updatable only through secured way with vendor's authorization.

The application part may comprise applications originating from various third parties, in particular a web browser 131 for navigating over the web. The device 100 can connect to distant servers 300 through a telecommunication network 200. Servers 300 can comprise web pages that the browser 131 can retrieve and display on the screen 110.

The firmware layer 120 comprises a proxy 121 configured to route data to be displayed on the screen 110 to the secured zone 111 or to the free zone 112. According to aspects of the invention, no data can be displayed without passing by the proxy. As it sits on the firmware, this proxy cannot be bypassed by applications sitting in the application layer 130.

Data originating from payment applications are routed by the proxy to the secured zone 111, while data originating from other applications are routed to the free zone 112. According to aspects of the invention, the zones are distinct: they share no intersection, and preferably they form a partition of the whole screen 110.

In consequence of such an arrangement, the user (i.e. cardholder) can determine easily if a data displayed in a screen originates from a payment application or from another application.

Furthermore, applications which needs to access to the secured zone 111 shall be signed. They can be signed by using the public key associated to the display 110. This should be the case to any payment application that requires the user to enter a PIN code or other sensitive information. The signature is performed at the installation of the system, and cannot be done by any third party without knowledge of the private key associated to the display.

When such applications want to display data on the screen 110, they send these data to the proxy 121. The proxy can verify these data. The verification may comprise both a verification of the content of the data and a check of the signature of the originating application. In consequence, no application can display any data on the secured zone without having been authenticated.

The data comprises data requiring a user to enter a PIN code or other sensitive information.

According to embodiments, other application installed on the device 100 can be signed also to further guarantee the overall security of the system. Genuinely, the applications cannot display data asking for PIN Code in the free zone 112 but only on the secured zone, as controlled by the proxy 121.

However, browser application 131 may retrieve from a distant server 300 some mischievous information configured to prompt a user for entering a PIN code. According to the invention, as this information (in general HTML data stream) does not originate from a payment application, the proxy routes it to the free zone 112.

As a consequence, from its position in the screen, the user can determine whether displayed data requiring him/her to enter a PIN code originates from a signed payment application or from a mischievous HTML stream or other source. Indeed, as previously explained, only a safe payment application can display data on the secured zone, so that s/he can fully trust inquiries to enter a PIN code displayed in the secured zone 111. He can then adapt easily his behavior by avoiding to enter any PIN code when prompted by a fake page.

According to embodiments, the secured zone may be graphically emphasized for a better understanding of the user. For instance, the secured zone may be displayed in red or with special "look & feel" elements.

According to embodiments, the secured zone may adapt its size according to the data to be displayed. In particular, it can be minimized when no data are received from a payment application (no PIN code to enter), and can been enlarged when some data are received for prompting the cardholder to enter a PIN code.

According to embodiments, wherein, when minimized, the secured zone 111 display an explicit text for warning users to not enter sensitive information in the free zone 112 (like for instance "Payment here"). When enlarged, the secured zone can show a typical screen for entering a PIN code with a number keyboard.

FIGs. 2a and 2b show two examples of the appearance of a screen according to embodiments of the invention.

In these examples, the device is a smartphone or a similar device enabling the user to surf over the internet. He can use a dedicated browser 131 to browse the web pages of an online shop. He can put some purchased item in a virtual basket. During this phase, as shown in FIG. 2a, the secured zone 111 is minimized and shows an explicit text, "Payment here", inciting the user to not enter any payment information elsewhere (i.e. in the free zone 112).

Once the shopping is done, the cardholder can access the final virtual basket. Then, the payment application is launched by the browser and sends relevant data to the proxy. The proxy can then instruct the driver of the screen to enlarge the secured zone 111 and reduce accordingly the free zone 112, as depicted in FIG. 2b.

The invention has been described with reference to preferred embodiments. However, many variations are possible within the scope of the invention.

## Claims

1. Method for displaying payment information at an electronic payment acceptance device (100), wherein :
- data from a payment application are routed by a proxy (121) located in the firmware (120) of said device, to a first zone (111) of a screen associated with said device,
- data from other applications are routed by said proxy to a second zone (112) of said screen, said first and second zones being distinct,
wherein data from said payment application are verified by said proxy before being routed to said first zone (111), the verification comprising a check of a signature of said payment application.

2. Method according to the previous claim, wherein said first zone is minimized when no data are received and enlarged when data are received from said payment application.

3. Method according to the previous claim, wherein, when minimized, said first zone (111) displays an explicit text for warning users to not enter sensitive information in said second zone (112).

4. Computer program product comprising instructions which, when the program is executed by a computer, cause the computer to carry out the steps of the method according to any of the previous claims.

5. Electronic payment acceptance device (100) comprising a screen (110), a firmware (120) and an application layer (130), wherein said firmware comprises a proxy configured to route data from a payment application of said application layer to a first zone (111) of said screen, and to route data from other applications of said application layer to a second zone (112) of said screen, and wherein said proxy is configured to verify data from said payment application before being routed to said first zone (111), the verification comprising a check of a signature of said payment application.

6. Electronic payment acceptance device (100) according to the previous claim, configured to minimize said first zone when no data are received and to enlarge it when data are received from said payment application.

7. Electronic payment acceptance device (100) according to the previous claim, configured to, when minimized, said first zone (111) display an explicit text for warning users to not enter sensitive information in said second zone (112).

## Patentansprüche

1. Verfahren zum Anzeigen von Zahlungsinformationen auf einer elektronischen Zahlungsannahmevorrichtung (100), wobei:
- Daten aus einer Zahlungsanwendung durch einen Proxy (121), der sich in der Firmware (120) der Vorrichtung befindet, zu einer ersten Zone (111) eines mit der Vorrichtung verknüpften Bildschirms geroutet werden,
- Daten aus anderen Anwendungen durch den Proxy zu einer zweiten Zone (112) des Bildschirms geroutet werden, wobei die erste und die zweite Zone voneinander verschieden sind,
wobei Daten aus der Zahlungsanwendung durch den Proxy verifiziert werden, bevor sie zu der ersten Zone (111) geroutet werden, wobei die Verifizierung eine Überprüfung einer Signatur der Zahlungsanwendung umfasst.

2. Verfahren nach dem vorangehenden Anspruch, wobei die erste Zone minimiert wird, wenn keine Daten von der Zahlungsanwendung empfangen werden, und vergrößert wird, wenn Daten von der Zahlungsanwendung empfangen werden.

3. Verfahren nach dem vorangehenden Anspruch, wobei die erste Zone (111), wenn sie minimiert ist, einen expliziten Text anzeigt, der Benutzer ermahnt, keine sensiblen Informationen in die zweite Zone (112) einzugeben.

4. Computerprogramm, umfassend Instruktionen, die, wenn das Programm durch einen Computer ausgeführt wird, den Computer veranlassen, die Schritte des Verfahrens nach einem der der vorangehenden Ansprüche durchzuführen.

5. Elektronische Zahlungsannahmevorrichtung (100), umfassend einen Bildschirm (110), eine Firmware (120) und eine Anwendungsschicht (130), wobei die Firmware einen Proxy umfasst, der dazu eingerichtet ist, Daten von einer Zahlungsanwendung der Anwendungsschicht zu einer ersten Zone (111) des Bildschirms zu routen und Daten von anderen Anwendungen der Anwendungsschicht zu einer zweiten Zone (112) des Bildschirms zu routen, und wobei der Proxy dazu eingerichtet ist, Daten aus der Zahlungsanwendung zu verifizieren, bevor sie zu der ersten Zone (111) geroutet werden, wobei die Verifizierung eine Überprüfung einer Signatur der Zahlungsanwendung umfasst.

6. Elektronische Zahlungsannahmevorrichtung (100) nach dem vorangehenden Anspruch, dazu eingerichtet, die erste Zone zu minimieren, wenn keine Daten von der Zahlungsanwendung empfangen werden, und sie zu vergrößern, wenn Daten von der Zahlungsanwendung empfangen werden.

7. Elektronische Zahlungsannahmevorrichtung (100) nach dem vorangehenden Anspruch, so eingerichtet, dass die erste Zone (111), wenn sie minimiert ist, einen expliziten Text anzeigt, der Benutzer ermahnt, keine sensiblen Informationen in die zweite Zone (112) einzugeben.

## Revendications

1. Procédé destiné à afficher des informations de paiement sur un dispositif d'acceptation de paiement électronique (100), dans lequel :
- des données provenant d'une application de paiement sont acheminées par un mandataire (121) situé dans le microprogramme (120) dudit dispositif, vers une première zone (111) d'un écran associé audit dispositif,
- des données provenant d'autres applications sont acheminées par ledit mandataire vers une seconde zone (112) dudit écran, lesdites première et seconde zones étant distinctes,
dans lequel les données provenant de ladite application de paiement sont vérifiées par ledit mandataire avant d'être acheminées vers ladite première zone (111), la vérification comportant un contrôle d'une signature de ladite application de paiement.

2. Procédé selon la revendication précédente, dans lequel ladite première zone est réduite lorsqu'aucune donnée n'est reçue et agrandie lorsque des données sont reçues de ladite application de paiement.

3. Procédé selon la revendication précédente, dans lequel, lorsqu'elle est réduite, ladite première zone (111) affiche un texte explicite pour avertir les utilisateurs de ne pas entrer d'informations sensibles dans ladite seconde zone (112).

4. Produit de programme informatique comportant des instructions qui, lorsque le programme est exécuté par un ordinateur, amènent l'ordinateur à mettre en œuvre les étapes du procédé selon l'une quelconque des revendications précédentes.

5. Dispositif d'acceptation de paiement électronique (100) comportant un écran (110), un microprogramme (120) et une couche application (130), dans lequel ledit microprogramme comporte un mandataire configuré pour acheminer des données provenant d'une application de paiement de ladite couche application vers une première zone (111) dudit écran, et acheminer des données provenant d'autres applications de ladite couche application vers une seconde zone (112) dudit écran, et dans lequel ledit mandataire est configuré pour vérifier les données provenant de ladite application de paiement avant d'être acheminées vers ladite première zone (111), la vérification comportant un contrôle d'une signature de ladite application de paiement.

6. Dispositif d'acceptation de paiement électronique (100) selon la revendication précédente, configuré pour réduire ladite première zone lorsqu'aucune donnée n'est reçue et pour l'agrandir lorsque des données sont reçues de ladite application de paiement.

7. Dispositif d'acceptation de paiement électronique (100) selon la revendication précédente, configuré pour que ladite zone (111), lorsqu'elle est réduite, affiche un texte explicite pour avertir les utilisateurs de ne pas entrer d'informations sensibles dans ladite seconde zone (112).
